# EUROPEAN PATENT APPLICATION

(11) **EP 0 896 270 A1**
(43) Date of publication of application: **10.02.1999**
(21) Application number: 97305888.6
(22) Date of filing: 04.08.1997
(51) Int. Cl.: G05F 1/63, H02P 7/74

(54) **Reverse proportional voltage adjusting circuit system**

(71) Applicant: Yang, Tai Her, Si-Hu Town, Dzan Hwa (TW)
(72) Inventor: Yang, Tai Her, Si-Hu Town, Dzan Hwa (TW)
(74) Representative: Pratt, David Martin

(57) **Abstract**

The reverse proportional voltage adjusting circuit system is by employing the DC or AC adjusting motor as the adjuster device to series combine with the load, whereby to follow the loading impedance changes for corresponding speed variations to show different impedance values and to further adjust the main loading end voltage; thereof in the circuit, the adjusting motor can be further employed as the motor of the adjuster device and provided with mechanical or electrical adjusting load to actively adjust the end voltage of the main load by controlling the impedance capacity of the adjusting load; wherein the adjusting load properties for the adjusting motor include the following: 1) mechanical load ; 2) the adjusting motor is employed to drive the auxiliary generator to provide generated power to the adjusting power load and to control its power generation capacity; 3) the power of the auxiliary generator driven by the motor is feedback to the power source and its feedback power capacity is operated to control the loading end voltage; therein the item 3) of the above said methods is characterized in a lower cost and loss active adjusting circuit in large power applications.

## Description

The reverse proportional voltage adjusting circuit system is by employing the DC or AC adjusting motor as the adjuster device to series combine with the load, whereby to follow the loading impedance changes for corresponding speed variations to show different impedance values and to further adjust the main loading end voltage; thereof in the circuit, the adjusting motor can be further employed us the motor of the adjuster device and provided with mechanical or electrical adjusting load to actively adjust the end voltage of the main load by controlling the impedance capacity of the adjusting load.

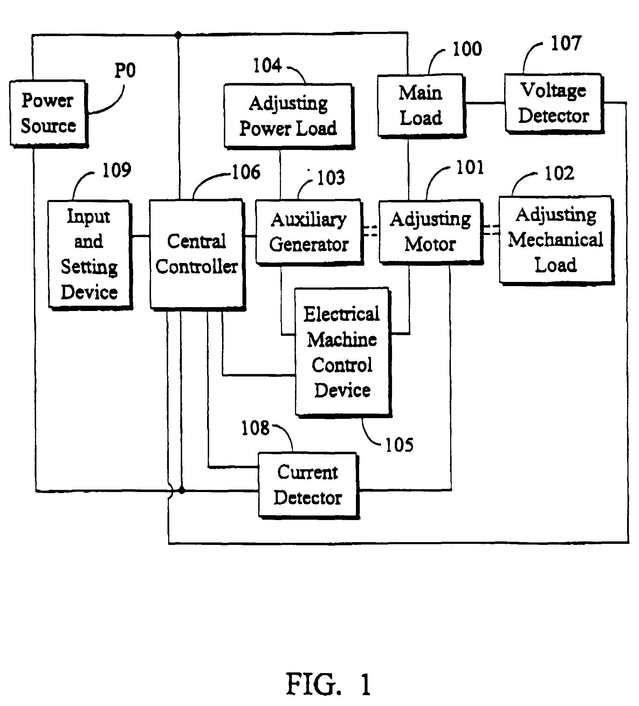

Figure 1 is a chief embodying schematic block diagram of the invention.

The conventional adjusting circuits are usually through the mechanical or solid state component or linear components such as resistors, or impedance components such as inductors or capacitors to match with the solid state analog or solid state switching components such as power transistors or thyristors for current distribution control to constitute the adjusting function; or by series combining the power transistor or thyristor and the load to constitute the series combination adjusting function to further control the loading end voltage or current, therein the switching component adjusted circuit has a large output power pulsation rate and easily prone to generate noise, while the adjuster component of the analog component adjusted circuit has a higher heat loss.

The reverse proportional voltage adjusting circuit system is by employing the DC or AC adjusting motor as the adjuster device to series combine with the load, whereby to follow the loading impedance changes for corresponding speed variations to show different impedance values and to further adjust the main loading end voltage; thereof in the circuit, the adjusting motor can be further employed as the motor of the adjuster device and provided with mechanical or electrical adjusting load to actively adjust the end voltage of the main load by controlling the impedance capacity of the adjusting load; wherein the adjusting load properties for the adjusting motor include the following: 1) mechanical load ; 2) the adjusting motor is employed to drive the auxiliary generator to provide generated power to the adjusting power load and to control its power generation capacity; 3) the power of the auxiliary generator driven by the motor is feedback to the power source and its feedback power capacity is operated to control the loading end voltage; therein the item 3) of the above said methods is characterized in a lower cost and loss active adjusting circuit in large power applications.

Figure 1 is a chief embodying schematic block diagram of the reverse proportional voltage adjusting circuit system, wherein it is mainly comprised of the following:
- A power source P0: It is an AC or DC power source which is series installed with a motor to drive the load;
- A main load 100: It is a resistive, a capacitive or an inductive load or a rotational electrical machine or a battery to match with the power source P0;
- An adjusting motor 101: It is an AC or DC, brushed or brushless, synchronous or asynchronous motor which is selected according to the power source P0 and the loading power types.

The main circuit is constituted by the above said three embodying units, and the following auxiliary devices are totally or partially selected as required, wherein they include the following:
- An adjusting mechanical load 102: It is for providing the controllable and more stable mechanical impedance structure such as constituted by the fluid impedance pump, friction impedance damping device or electromagnetic eddy current damping devices;
- An auxiliary generator 103: It is an AC or DC, brushed or brushless, synchronous or asynchronous generator which is driven by the adjusting motor to covert the mechanical energy into the electric power;
- An adjusting power load 104: It is a resistive thermoelectric component or a battery, wherein its electric power loss capacity can be controlled to accept the generated power from the auxiliary generator 103 to constitute the load damping of the auxiliary generator;
- An electrical machine control device 105: It is comprised of solid state or electromechanical components to control the driving rotation direction, rotation speed, current value, end voltage value of the adjusting motor and to further control the corresponding effective impedance of the main load 100 and the generated power capacity of the auxiliary generator 103;
- A central controller 106: It is comprised of the solid state or electromechanical circuit components or the microprocessor and relevant software to operate the setting, calculations, and comparisons as well as the driving and control corresponding to each component of the reverse proportional voltage adjusting circuit system;
- A loading voltage detector device 107: It is an analog or digital type voltage detector device comprised of solid state or electromechanical circuit components to produce the analog or digital signals corresponding to the detected voltage value for providing output to the central controller 106 for corresponding control on the relevant components;
- A loading current detector device 108: It is an analog or digital type voltage detector device comprised of solid state or electromechanical circuit components to produce the analog or digital signals corresponding to the detected current value for providing output to the central controller 106 for corresponding control on the relevant components;
- An input and setting device 109: It is comprised of solid state or electromechanical circuit components for operating and setting the operation of the reverse proportional voltage adjusting circuit system.

the reverse proportional voltage adjusting circuit system has all or part of the following functions:
**F1**: The adjusting motor is series combined with the load, whereof its operating speed and counter electromotive force is varied following the changes of the loading impedance or end voltage.
**F2**: The adjusting motor is series combined with the load, whereof its operating speed and impedance is varied following the changes of the loading impedance or end voltage.
**F3**: The counter electromotive force of the auxiliary generator is controlled by the electrical machine control device to actively adjust the loading end voltage or current;
**F4**: The impedance value of the auxiliary generator is controlled by the electrical machine control device to actively adjust the loading end voltage or current;
**F5**: The mechanical load damping is controlled to actively adjust the loading end voltage or current;
**F6**: The adjusting loading power output capacity of the generator is controlled by the electrical machine control device to actively adjust the loading end voltage or current;
**F7**: The power feedback capacity to the power source P0 is controlled by the electrical machine control device and the central controller to further actively adjust the loading end voltage or current.

Through selecting the loading properties for the adjusting motor and the auxiliary generator load of the above sold system, the following embodying types and functions can be obtained:
- The main load is series combined with the adjusting DC motor to constitute the free adjusting status following the main loading power capacity changes, wherein its function is the same as in F1;
- The main load is series combined with the adjusting AC motor to constitute the free adjusting status following the main loading power capacity changes, wherein its function is the same as in F2;
- The main load is series combined with the adjusting motor and through the electric power control device to actively adjust the main loading end voltage or current, wherein its function is the same as in F3 and F4;
- The main load is series combined with the adjusting motor and the motor mechanical damping is controlled to actively adjust the main loading end voltage or current, wherein its function is the same as in F5;
- The main load is series combined with the adjusting motor and the motor is employed to drive the auxiliary generator, wherein the adjusting loading power output capacity of the generator is controlled through the electrical machine control device to actively adjust the main loading end voltage or current, wherein its function is the same as in F6;
- The main load is series combined with the adjusting motor and the motor is employed to drive the auxiliary generator, wherein the power feedback capacity from the generator to the power source P0 is controlled through the electrical machine control device and the central controller to actively adjust the main loading end voltage or current, wherein its function is the same as in F7;

## Claims

1. A reverse proportional voltage adjusting circuit system is by employing the DC or AC adjusting motor as the adjuster device to series combine with the load, whereby to follow the loading impedance changes for corresponding speed variations to show different impedance values and to further adjust the main loading and voltage; thereof in the circuit, the adjusting motor can be further employed as the motor of the adjuster device and provided with mechanical or electrical adjusting load to actively adjust the end voltage of the main load by controlling the impedance capacity of the adjusting load; wherein the adjusting load properties for the adjusting motor include the following: 1) mechanical load ; 2) the adjusting motor is employed to drive the auxiliary generator to provide generated power to the adjusting power load and to control its power generation capacity; 3) the power of the auxiliary generator driven by the motor is feedback to the power source and its feedback power capacity is operated to control the loading end voltage.

2. The reverse proportional voltage adjusting circuit system as in claim 1, wherein it is mainly comprised of the following:
• A power source P0: It is an AC or DC power source which is series installed with a motor to drive the load:
• A main load 100: It is a resistive, a capacitive or an inductive load or a rotational electrical machine or a battery to match with the power source P0;
• An adjusting motor 101: It is an AC or DC, brushed or brushless, synchronous or asynchronous motor which is selected according to the power source P0 and the loading power types.
The main circuit is constituted by the above said three embodying units, and the following auxiliary devices are totally or partially selected as required, wherein they include the following:
• An adjusting mechanical load 102: It is for providing the controllable and more stable mechanical impedance structure such as constituted by the fluid impedance pump, friction impedance damping device or electromagnetic eddy current damping devices;
• An auxiliary generator 103: It is an AC or DC, brushed or brushless, synchronous or asynchronous generator which is driven by the adjusting motor to covert the mechanical energy into the electric power;
• An adjusting power load 104: It is a resistive thermoelectric component or a battery, wherein its electric power loss capacity can be controlled to accept the generated power from the auxiliary generator 103 to constitute the load damping of the auxiliary generator;
• An electrical machine control device 105: It is comprised of solid state or electromechanical components to control the driving rotation direction, rotation speed, current value, end voltage value of the adjusting motor and to further control the corresponding effective impedance of the main load 100 and the generated power capacity of the auxiliary generator 103;
• A central controller 106: It is comprised of the solid state or electromechanical circuit components or the microprocessor and relevant software to operate the setting, calculations, and comparisons as well as the driving and control corresponding to each component of the reverse proportional voltage adjusting circuit system;
• A loading voltage detector device 107: It is an analog or digital type voltage detector device comprised of solid state or electromechanical circuit components to produce the analog or digital signals corresponding to the detected voltage value for providing output to the central controller 106 for corresponding control on the relevant components;
• A loading current detector device 108: It is an analog or digital type voltage detector device comprised of solid state or electromechanical circuit components to produce the analog or digital signals corresponding to the detected current value for providing output to the central controller 106 for corresponding control on the relevant components;
• An input and setting device 109: It is comprised of solid state or electromechanical circuit components for operating and setting the operation of the reverse proportional voltage adjusting circuit system.
the reverse proportional voltage adjusting circuit system has all or part of the following functions:
**F1**: The adjusting motor is series combined with the load, whereof its operating speed and counter electromotive force is varied following the changes of the loading impedance or end voltage.
**F2**: The adjusting motor is series combined with the load, whereof its operating speed and impedance is varied following the changes of the loading impedance or end voltage.
**F3**: The counter electromotive force of the auxiliary generator is controlled by the electrical machine control device to actively adjust the loading end voltage or current;
**F4**: The impedance value of the auxiliary generator is controlled by the electrical machine control device to actively adjust the loading end voltage or current;
**F5**: The mechanical load damping is controlled to actively adjust the loading end voltage or current;
**F6**: The adjusting loading power output capacity of the generator is controlled by the electrical machine control device to actively adjust the loading end voltage or current;
**F7**: The power feedback capacity to the power source P0 is controlled by the electrical machine control device and the central controller to further actively adjust the loading end voltage or current.
Through selecting the loading properties for the adjusting motor and the auxiliary generator load of the above said system, the following embodying types and functions can be obtained:
• The main load is series combined with the adjusting DC motor to constitute the free adjusting status following the main loading power capacity changes, wherein its function is the same as in F1;
• The main load is series combined with the adjusting AC motor to constitute the free adjusting status following the main loading power capacity changes, wherein its function is the same as in F2;
• The main load is series combined with the adjusting motor and through the electric power control device to actively adjust the main loading end voltage or currant, wherein its function is the same as in F3 and F4;
• The main load is series combined with the adjusting motor and the motor mechanical damping is controlled to actively adjust the main loading end voltage or current, wherein its function is the same as in F5;
• The main load is series combined with the adjusting motor and the motor is employed to drive the auxiliary generator, wherein the adjusting loading power output capacity of the generator is controlled through the electrical machine control device to actively adjust the main loading end voltage or current, wherein its function is the same as in F6;
• The main load is series combined with the adjusting motor and the motor is employed to drive the auxiliary generator, wherein the power feedback capacity from the generator to the power source P0 in controlled through the electrical machine control device and the central controller to actively adjust the main loading and voltage or current, wherein its function is the same as in F7.

3. A reverse proportional voltage adjusting circuit having a DC or AC adjusting motor as an adjuster device in series with a load, thereby to follow the loading impedance changes for corresponding speed variations to show different impedance values and to further adjust the end voltage of the main load, wherein the adjusting motor is provided with a mechanically or electrically adjustable load for adjusting the end voltage of the main load by controlling the impedance capacity of the adjustable load.
